# EUROPEAN PATENT SPECIFICATION

(11) **EP 2 617 282 B1**
(45) Date of publication and mention of the grant of the patent: **11.03.2015**
(21) Application number: 13151594.2
(22) Date of filing: 17.01.2013
(51) Int. Cl.: A01G 31/06

(54) **Temporary immersion device for temporarily immersing crops in a liquid substrate and respective method**
Vorrichtung und Verfahren zum zeitweise Untertauchen von Pflanzen in ein nährstoffhaltiges flüssiges Medium
Dispositif et méthode pour submerger des plantes dans un substrat liquide

(30) Priority: 18.01.2012 IT VR20120010
(43) Date of publication of application: 24.07.2013
(73) Proprietor: Depaoli, Claudio, 38010 Taio, Trento (IT)
(72) Inventor: Depaoli, Claudio, 38010 Taio, Trento (IT)
(74) Representative: Manfrin, Marta

(56) References cited:
- EP-A1- 0 594 159
- WO-A1-2012/005121
- FR-A1- 2 766 660

## Description

The present disclosure generally refers to the field of *in vitro* cultures in a liquid substrate, such as a pure liquid or gel, or a similar substance of fluid consistency capable of providing nourishment to the cultures. More particularly, the present disclosure refers to a temporary immersion device for temporarily immersing cultures and crops in the liquid substrate.

The device according to the present disclosure is employed for growing and developing, in a liquid substrate, cultures, organisms or parts thereof, in the present disclosure generally referred to as "crops", wherein the crops are in contact with the liquid substrate just for short periods of time within the space of one day. Such a device is known from e.g. WO2012/005121 A1.

A known device comprises a sterile container, closed by a lid, in which one or more cranes suitable for housing the crops are placed. The crane is immersed in the liquid substrate, which is on the bottom of the container. In the known device, the container is provided with inlets through which compressed air is inlet, for short periods. Compressed air is sent toward the crane, so as to temporarily raise it with respect to the liquid.

Another known device envisages placing the crane above the level of the liquid, and periodically inletting compressed air sent toward the liquid so as to make the liquid rise again and wet the crop that is in the crane.

Both known devices, though advantageous under many standpoints, entail some drawbacks.

For example, a drawback is that the inletting of compressed air from the outside requires the use of several filters to filter air prior to the inletting, in order to safeguard sterility of the environment inside the container. Known devices therefore require a periodic check of the filters so as to prevent the inletting of contaminating substances in the container.

Hence, the present disclosure stems from the technical problem of providing a temporary immersion device of crops in a liquid substrate and a method for temporarily immersing such crops allowing to obviate the drawback mentioned above with reference to the known art and/or attain further advantages and/or entail further technical features.

This is obtained by providing a device according to independent claim 1. The mentioned technical problem is also solved by a method according to claim 14.

Particular embodiments of the subject of the present disclosure are defined in the corresponding dependent claims.

A solution idea at the basis of the present disclosure is to move a support member, supporting the crops inside the container, by a pneumatic system which is isolated, i.e. separated or closed, with respect to an inner chamber of the container, so that a fluid employed in the pneumatic system does not contact the crops, and thereby container sterility may be preserved.

On the basis of said solution idea, the aforesaid technical problem is solved by a temporary immersion device for growing crops in a liquid substrate, said device comprising
- a closed container defining an inner chamber suitable for housing the crops,
- at least one support member placed in the inner chamber and suitable for supporting the crops;
- an actuating pneumatic tool including a casing closed with respect to said inner chamber and connected to said support member, and wherein
- said pneumatic tool is adapted to move said support member in said inner chamber between a first position and a second position on the basis of a variation of fluid pressure in said casing of the actuating pneumatic tool.

In practice, the actuating pneumatic tool includes a casing separated from the inner chamber, in which it is possible to generate a difference of fluid pressure such as to move the support member. In fact, by connecting the casing of the actuating pneumatic tool to a vacuum source or to a source of pressurized fluid, a variation of fluid pressure in the actuating pneumatic tool can be generated, such as to allow a displacement of the support member connected thereto.

In one embodiment, the actuating pneumatic tool is associated with a top zone of the container, so that, following a pressure reduction in the casing, a displacement of the support member occurs and, consequently an emersion of the crops from the liquid substrate which is in a bottom zone of the container.

In one embodiment, the casing is a flexible and collapsible envelope. In said embodiment, the variation of pressure is a pressure reduction determining a collapse of the casing on itself, and a consequent displacement of the support member connected to the casing. In one embodiment, in order to foster the collapse of the casing, the casing is a bellows-shaped envelope.

In one embodiment, to connect the casing to the support member a rigid element is provided, e.g. piston-like, which on one side in inserted in the aforesaid casing and, on the other side, is connected to the support member. The movement of the rigid element can be guided by a guide element that is fixed to the container, and is placed inside the casing.

In one embodiment, in a connecting zone connecting the casing to the container it is provided the use of a seal porous to air, which enables to realize a slow gaseous exchange over time between an atmosphere of the inner chamber of the container and an atmosphere external to the container, so as to avoid the need to open the container to change the atmosphere in the inner chamber.

In alternative embodiments the variation of pressure is a pressure increase of the fluid. In this case, the actuating pneumatic tool is connected to a source of pressurized fluid, so that a pressure increase determines a lifting of the support member and of the crops. In this solution it can be convenient to place the actuating pneumatic tool in a bottom zone of the container so as to lift the support member from the bottom.

Further advantages, features and the operation steps of the subject of the present disclosure will be made evident in the following detailed description of a preferred embodiment thereof, given by way of example and not for limitative purposes. However, it is evident how each embodiment of the subject of the present disclosure may have one or more of the advantages listed above; in any case, however, it is not required for each embodiment to concomitantly have all of the advantages listed. Reference will be made to the figures of the annexed drawings, wherein:
- Figure 1 shows a schematic side view of a temporary immersion device according to one embodiment of the present disclosure in a first operation step;
- Figure 2 shows a side view of a temporary immersion device according to one embodiment of the present disclosure in a second operation step;

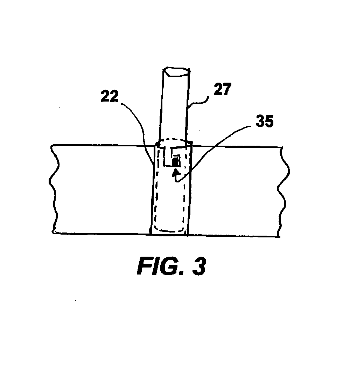

- Figure 3 shows a detail of a temporary immersion device according to one embodiment of the present disclosure;
- Figure 4 shows a detail of a temporary immersion device, with detached parts and according to one embodiment of the present disclosure; and
- Figure 5 shows a detail of a temporary immersion device in an assembled condition and according to one embodiment of the present disclosure.

Referring to the annexed figures, by reference number 10 a temporary immersion device for growing crops in a liquid substrate is denoted. The crops are denoted by reference number 12 and the liquid substrate by reference number 13.

The temporary immersion device 10 comprises a box-shaped closed container 15, comprising a base body 16 or vessel, and a cover 17. The container 15 defines an inner chamber 18 suitable for housing the crops 12.

At least one support member 20, having a perforated wall, and in the example being crane-shaped, is placed in the container 15, said support member 20 being suitable for supporting said crops 12. The support member 20 is provided with a central housing 22 of tubular shape.

The temporary immersion device 10 further comprises an actuating pneumatic tool 24.

Such actuating pneumatic tool 24 comprises a casing 25 placed inside the container 15. Said casing 25 is a fluid-tight isolated casing with respect to said inner chamber 18, so as to be able to generate in said casing 25 a positive pressure, or alternatively a negative pressure, of fluid with respect to said inner chamber 18. In the exemplary embodiment, the casing 25 is a bellows-shaped balance reservoir, in the example made of silicone, which is suitable to be compressed by vacuum or negative pressure generation. The casing 25 is associated in a top region of the inner chamber 18, and in particular is associated with the cover 17 of the container 15.

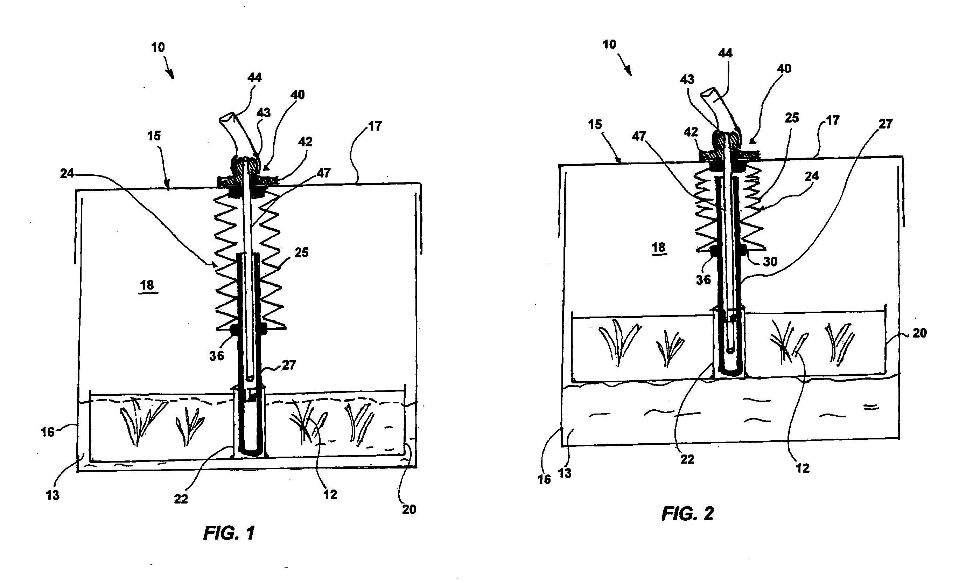

The temporary immersion device 10 further comprises a connecting element or motion-transmitting element 27 connected in an intermediate position between the casing 25 and said support member 20. In the exemplary embodiment the motion-transmitting element 27 is a tubular body of stainless steel, of rigid structure comparable to a piston, adapted to resist over a long period of time to contact with the liquid substrate 13. The motion-transmitting element 27 is partially inserted in the casing 25 and in the central housing 22 of the support member 20. Furthermore, a coupling device 35, similar to a bayonet joint, is provided to stably anchor the motion-transmitting element 27 to the central housing 22 of the support member 20. On the basis of a variation of pressure inside the casing 25, the motion-transmitting element 27 is movable in the inner chamber 18 between at least one lowered first position (visible in Figure 1), in which the support member 20 and the crops 12 are submerged in the liquid substrate 13, and at least one lifted second position (Figure 2), in which the support member 20 and the crops 12 are emersed from the liquid substrate 13. The displacement of the support member 20 via the motion-transmitting element 27 is therefore based on a variation of pressure in the casing 25.

In the exemplary embodiment illustrated, to obtain the aforesaid placement and displacements of parts on the basis of a variation of pressure in the casing 25, the temporary immersion device 10 comprises a first opening 23, which is made in a wall of the container 15, in the example of the cover 17, a second opening 29 made in the casing 25, which is associated in a fluid-tight manner with the first opening 23, and a third opening 30, made in the casing 25 and in which is placed, in a fluid-tight manner via the seal 36, the motion-transmitting element 27.

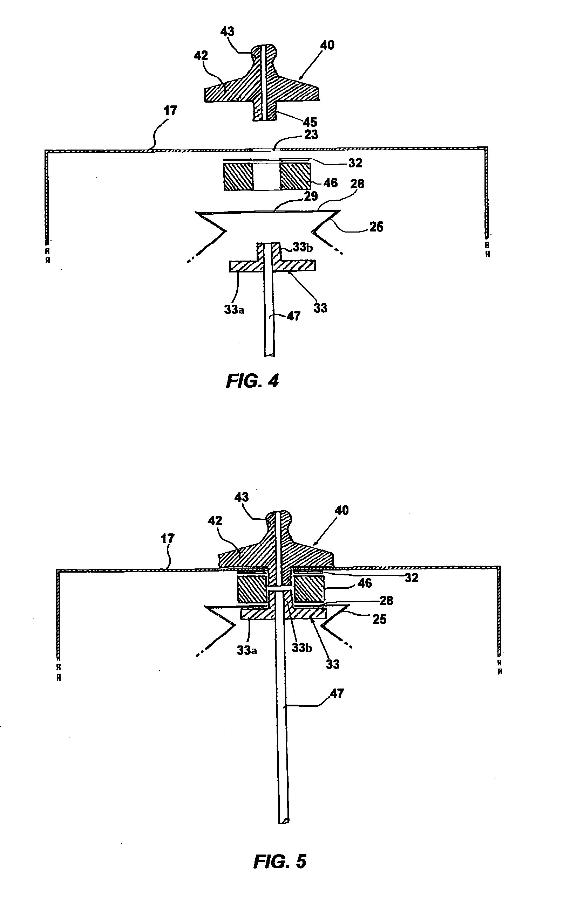

The temporary immersion device 10 comprises a plug-like body 40 which is associated with said first opening 23 and second opening 29 (Figure 4) and is provided internally with a through opening.

Said plug-like body 40 comprises an enlarged portion 42 placed outside of the container 15, and provided with an appendix 43 adapted to be connected to a flexible duct 44 (partially illustrated in the drawings). In practice, the plug-like body 40 can be connected to a source of pressurized gas or a vacuum source via the flexible duct 44.

Referring to Figure 4 and Figure 5, the plug-like body 40 comprises a threaded inner portion 45 or threaded rod, which is inserted into said first opening 23, a nut 46 and an internally hollow internal screw 33, including a head 33a and a stem 33b. In particular, the nut 46 is interposed, and connected, between the internal screw 33 and the threaded inner portion 45 of the plug-like body 40. A rigid cannula 47 open at their respective ends is housed in the internal screw 33. The rigid cannula 47, in particular, is housed in the casing 25 and in the motion-transmitting element 27, and is in fluid communication with the through opening of the plug-like body 40. The rigid cannula 47 can be likewise housed in the through opening of the plug-like body 40. A portion 28 of casing 25 surrounding the internal screw 33 is located between the head 33a of the internal screw 33 and the nut 46.

Moreover, a washer-shaped seal 32 is placed around the threaded inner portion 45. The nut 46 is screwed on the stem 33b of the internal screw 33 up to tighten the portion 28 of casing 25 against the head 33a of the internal screw 33 and on the threaded inner portion 45 up to tighten the seal 32 against the cover 17.

The seal 32 can be completely fluid-tight, or porous to gas/water so as to allow a gaseous exchange between the inner chamber 18 and an environment external to the container 15, which may foster culture improvement.

It is to be noted that the porosity of the seal 32 is selected so as not to affect the closure/fluid-tight isolation of the casing 25 with respect to the inner chamber 18, and the ability of the latter to determine a displacement of the support member 20 following a variation of pressure inside the casing 25.

As anticipated, in the exemplary embodiment illustrated, the temporary immersion device 10 is configured to operate in a condition of vacuum or negative pressure and is such as to generate a lifting of the support member 20, to lift it with respect to the liquid substrate 13 which is on the bottom of the container 15.

In practice, the lifting is obtained by a negative pressure occurring in the casing 25. In fact, the plug-like body 40 is connected to a vacuum source which determines a negative pressure of the casing 25 and a compression of the casing 25 on itself. Following such action, the motion-transmitting element 27 is lifted and consequently also lifts the support member 20, lifting the crops 12 from the substrate 13.

Then, by deactivating the vacuum source, the casing 25 spreads out again, returning the motion-transmitting element 27, and consequently also the support member 20, in a lowered position.

It may be observed that in this embodiment the rigid cannula 47 acts as guide for a displacement of the motion-transmitting element 27.

Moreover, it may be observed that thanks to the temporary immersion device according to the present disclosure the lifting can occur very simply and quickly, it being sufficient to connect the appendix 43 to the vacuum source, and removing the connection, i.e. the flexible duct 44, when lifting is not required, without affecting the sterility of the inner chamber.

The subject of the present disclosure has been hereto described with reference to preferred embodiments thereof. It is understood that other embodiments might exist. The invention, is defined by the scope of the claims set forth hereinafter.

## Claims

1. Temporary immersion device (10) for growing crops (12) in a liquid substrate (13), said device comprising a closed container (15) defining an inner chamber (18) suitable for housing the crops (12), at least one support member (20) placed in the inner chamber (18) and suitable for supporting said crops (12), and an actuating pneumatic tool (24) connected to said support member (20) and including a casing (25) closed with respect to said inner chamber (18), said actuating pneumatic tool (24) being adapted to move said support member (20) in said inner chamber (18) between a first position and a second position on the basis of a variation of fluid pressure in said casing (25).

2. Temporary immersion device (10) according to claim 1, wherein said casing (25) is placed in said inner chamber (18).

3. Temporary immersion device (10) according to claim 1 or 2, wherein the variation of pressure is a pressure reduction and the pressure reduction corresponds to a lifting displacement of the support member (20) between the first position and the second position.

4. Temporary immersion device (10) according to any one of the preceding claims, wherein said actuating pneumatic tool (24) is associated with a top zone (17) of the container (15).

5. Temporary immersion device (10) according to any one of the preceding claims, wherein said casing (25) is a fluid-tight isolated casing with respect to said inner chamber (18).

6. Temporary immersion device (10) according to claim 5, wherein the casing (25) is a casing of flexible material and/or a collapsible envelope and/or a bellows-shaped envelope.

7. Temporary immersion device (10) according to any one of the preceding claims 5 or 6, wherein the actuating pneumatic tool (24) is connected to said support member (20) via a rigid connecting element (27) inserted, on one side, in the casing (25) and fixed, on the other side, to the support member (20).

8. Temporary immersion device (10) according to claim 7, including a rigid cannula (47) open at their respective ends, said rigid cannula (47) being housed in the casing (25) and in the rigid connecting element (27), said cannula (47) acting as a guide for a displacement of said support member (20) between said first position and said second position and vice versa.

9. Temporary immersion device (10) according to any one of the preceding claims, comprising a first opening (23) made in a wall (17) of the container (15), a second opening (29) made in the casing (25) and associated in a fluid-tight manner with the first opening (23), and a plug-like body (40) associated with at least said first opening (23) and provided internally with a through opening.

10. Temporary immersion device (10) according to claim 9, wherein said plug-like body (40) comprises an enlarged portion (42) placed outside of the container (15), and provided with an appendix (43) adapted to be connected to a source of pressurized gas or a vacuum source.

11. Temporary immersion device (10) according to claim 9 or 10, wherein the plug-like body (40) comprises a threaded inner portion (45) or threaded rod, inserted into said first opening (23), a nut (46) and an internal screw (33) associated with said second opening (29), wherein the nut (46) is interposed, and connected, between the internal screw (33) and the threaded inner portion (45) of the plug-like body (40), and wherein a portion (28) of casing (25) surrounding the internal screw (33) is located between the internal screw (33) and the nut (46).

12. Temporary immersion device (10) according to claim 11, comprising a seal (32) placed around said threaded inner portion (45), and wherein the nut (46) is screwed on a stem (33b) of the internal screw (33) up to tighten the portion (28) of casing (25) against a head (33a) of the internal screw (33) and on the threaded inner portion (45) up to tighten the seal (32) against the wall (17) of the container (15).

13. Temporary immersion device (10) according to claim 12, wherein the seal (32) is porous to the passage of air.

14. A method for temporarily immersing crops (12) in a liquid substrate (13), the method comprising the steps of
- providing a closed container (15) defining an inner chamber (18) suitable for housing the crops (12),
- providing an actuating pneumatic tool (24) including a casing (25) closed with respect to said inner chamber (18);
- connecting the actuating pneumatic tool (24) to a support member (20) of the crops (12),
- varying a fluid pressure in the casing (25) of the actuating pneumatic tool (24) to move the support member (20) in the inner chamber (18) of the container (15) between a first position and a second position on the basis of said variation of pressure.

15. The process according to claim 14, wherein the variation of pressure is a pressure reduction and the pressure reduction corresponds to a lifting displacement of the support member (20) between the first position and the second position and an emersion of the crops from the liquid substrate (13).

## Patentansprüche

1. Temporäre Tauchvorrichtung (10) zum Kultivieren von Kulturpflanzen (12) in einem flüssigen Substrat (13), wobei die Vorrichtung einen geschlossenen Behälter (15) umfasst, welcher eine innere Kammer (18) definiert, die geeignet ist die Kulturpflanzen (12) zu beherbergen, mindestens ein Stützteil (20), welcher in der inneren Kammer (18) platziert ist und geeignet zur Stütze der Kulturpflanzen (12) ist und ein ansteuerbares, pneumatisches Hilfsmittel (24), welches mit diesem Stützteil (20) verbunden ist und ein Gehäuse (25) beeinhaltet, welches in Bezug auf die innere Kammer (18) geschlossen ist, wobei das ansteuerbare pneumatische Hilfsmittel (24) so angepasst ist, dass es das Stützteil (20) in der inneren Kammer (18) zwischen einer ersten Position und einer zweiten Position auf Basis der Variation des Flüssigkeitsdruckes in dem Gehäuse (25) bewegt.

2. Temporäre Tauchvorrichtung (10) gemäß Anspruch 1, wobei das Gehäuse (25) in der inneren Kammer (18) plaziert ist.

3. Temporäre Tauchvorrichtung (10) gemäß Anspruch 1 oder 2, wobei die Variation des Druckes ein Druckabfall ist und der Druckabfall zu einer anhebenden Verschiebung des Stützteils (20) zwischen der ersten Position und der zweiten Position korreliert.

4. Temporäre Tauchvorrichtung (10) nach einem der vorherigen Ansprüche, wobei das ansteuerbare, pneumatische Hilfsmittel (24) mit einer oberen Zone (17) des Behälters (15) assoziiert ist.

5. Temporäre Tauchvorrichtung (10) nach einem der vorherigen Ansprüche, wobei das Gehäuse (25) ein flüssigkeitsdichtes, isoliertes Gehäuse in Bezug auf die innere Kammer (18) ist.

6. Temporäre Tauchvorrichtung (10) nach Anspruch 5, wobei das Gehäuse (25) ein Gehäuse aus flexiblem Material und/oder einer klappbaren Umhüllung und/oder einer Balg-geformte Umhüllung ist.

7. Temporäre Tauchvorrichtung (10) nach einem der vorherigen Ansprüche 5 oder 6, wobei das ansteuerbare, pneumatische Hilfsmittel (24) mit dem Stützteil (20) mittels einem starren Verbindungselement (27) verbunden ist, welches auf der einen Seite in das Gehäuse (25) eingeführt wird und auf der anderen Seite an dem Stützteil (20) fixiert wird.

8. Temporäre Tauchvorrichtung (10) nach Anspruch 7, welche eine starre Kanüle (47) beeinhaltet, die an ihren entsprechenden Enden offen ist, wobei die starre Kanüle (47) in dem Gehäuse (25) beherbergt ist und die Kanüle (47) in dem starren Verbindungselement (27) als eine Führung für ein Verschieben des Stützteils (20) zwischen der ersten Position und der zweiten Position und umgekehrt dient.

9. Temporäre Tauchvorrichtung (10) nach einem der vorherigen Ansprüche umfassend eine erste Öffnung (23), welche in einer Wand (17) des Behälters (15) gemacht ist, eine zweite Öffnung (29), welche in dem Gehäuse (25) gemacht ist und auf eine flüssigkeitsdichte Art mit der ersten Öffnung (23) verbunden ist und einen steckerähnlichen Körper (40), welcher mit zumindest der ersten Öffnung (23) verbunden ist und innen mit einer durchgehenden Öffnung ausgestattet ist.

10. Temporäre Tauchvorrichtung (10) nach Anspruch 9, wobei der steckerähnliche Körper (40) einen vergrößerten Abschnitt (42) umfasst, welcher außerhalb des Gefäßes (15) plaziert ist und mit einem Anhang (43) ausgestattet ist, der angepasst ist, damit er mit einer Quelle von unter Druck stehendem Gas oder einer Vakuumquelle verbunden werden kann.

11. Temporäre Tauchvorrichtung (10) nach einem der Ansprüche 9 oder 10, wobei der steckerähnliche Körper (40) einen inneren Abschnitt mit Gewinde (45) oder Gewindestange umfasst, welche in die erste Öffnung (23) eingeführt wird, eine Mutter (46) und eine innere Schraube (33), welche mit der zweiten Öffnung (29) verbunden ist, wobei die Mutter (46) zwischengeschaltet und zwischen der inneren Schraube (33) und dem inneren Abschnitt mit Gewinde (45) des steckerähnlichen Körpers (40) verbunden ist und, wobei ein Abschnitt (28) des Gehäuses (25), welcher die innere Schraube (33) umgibt zwischen der internen Schraube (33) und der Mutter (46) lokalisiert ist.

12. Temporäre Tauchvorrichtung (10) nach Anspruch 11 umfassend eine Dichtung (32), welche um den inneren Abschnitt mit Gewinde (45) platziert ist und, wobei die Mutter (46) auf einen Stiel (33b) der inneren Schraube (33) geschraubt ist, um den Abschnitt (28) des Gehäuses (25) gegen einen Kopf (33a) der inneren Schraube (33) festzuziehen und auf den inneren Abschnitt mit Gewinde (45) geschraubt ist, um die Dichtung (32) gegen die Wand (17) des Behälters (15) festzuziehen.

13. Temporäre Tauchvorrichtung (10) nach Anspruch 12, wobei die Dichtung (32) für den Durchlass von Luft durchlässig ist.

14. Verfahren um Kulturpflanzen temporär in einem flüssigen Substrat (13) einzutauchen, wobei das Verfahren die Schritte umfasst
- Bereitstellen eines geschlossenen Behälters (15), welcher eine innere Kammer (18) definiert, die für das Beherbergen der Kulturpflanzen (12) geeignet ist,
- Bereitstellen eines ansteuerbaren, pneumatischen Hilfsmittels (24), welches ein Gehäuse (25) beeinhaltet, das in Bezug auf die innere Kammer (18) geschlossen ist;
- Verbinden des ansteuerbaren, pneumatischen Hilfsmittels (24) mit einem Stützteil (20) der Kulturpflanzen (12),
- Variieren eines Flüssigkeitsdruckes in dem Gehäuse (25) des ansteuerbaren, pneumatischen Hilfsmittels (24), um das Stützteil (20) in der inneren Kammer (18) des Behälters (15) zwischen einer ersten Position und einer zweiten Position auf Basis der Variation des Druckes zu bewegen.

15. Verfahren nach Anspruch 14, wobei die Variation des Druckes eine Druckverringerung ist und die Druckverringerung mit einer anhebenden Verschiebung des Stützteils (20) zwischen der ersten Position und der zweiten Position und einem Auftauchen der Kulturpflanzen aus dem flüssigen Substrat (13) korreliert.

## Revendications

1. Dispositif d'immersion temporaire (10) pour faire pousser des cultures (12) dans un substrat liquide (13), ledit dispositif comprenant un contenant fermé (15) définissant une chambre interne (18) appropriée pour loger les cultures (12), au moins un élément de support (20) placé dans la chambre interne (18) et approprié pour supporter lesdites cultures (12) et un outil pneumatique d'actionnement (24) raccordé audit élément de support (20) et comprenant un boîtier (25) fermé par rapport à ladite chambre interne (18), ledit outil pneumatique d'actionnement (24) étant adapté pour déplacer ledit élément de support (20) dans ladite chambre interne (18) entre une première position et une seconde position en fonction d'une variation de pression de fluide dans ledit boîtier (25).

2. Dispositif d'immersion temporaire (10) selon la revendication 1, dans lequel ledit boîtier (25) est placé dans ladite chambre interne (18).

3. Dispositif d'immersion temporaire (10) selon la revendication 1 ou 2, dans lequel la variation de pression est une réduction de pression et la réduction de pression correspond à un déplacement de levage de l'élément de support (20) entre la première position et la seconde position.

4. Dispositif d'immersion temporaire (10) selon l'une quelconque des revendications précédentes, dans lequel ledit outil pneumatique d'actionnement (24) est associé à une zone supérieure (17) du contenant (15).

5. Dispositif d'immersion temporaire (10) selon l'une quelconque des revendications précédentes, dans lequel ledit boîtier (25) est un boîtier isolé étanche au fluide par rapport à ladite chambre interne (18).

6. Dispositif d'immersion temporaire (10) selon la revendication 5, dans lequel le boîtier (25) est un boîtier de matériau flexible et/ou une enveloppe pliable et/ou une enveloppe en forme de soufflet.

7. Dispositif d'immersion temporaire (10) selon l'une quelconque des revendications 5 ou 6, dans lequel l'outil pneumatique d'actionnement (24) est raccordé audit élément de support (20) via un élément de raccordement rigide (27) inséré, d'un côté, dans le boîtier (25) et fixé, de l'autre côté, sur l'élément de support (20).

8. Dispositif d'immersion temporaire (10) selon la revendication 7, comprenant une canule rigide (47) ouverte au niveau de ses extrémités respectives, ladite canule rigide (47) étant logée dans le boîtier (25) et dans l'élément de raccordement rigide (27), ladite canule (47) servant de guide pour un déplacement dudit élément de support (20) entre ladite première position et ladite seconde position et vice versa.

9. Dispositif d'immersion temporaire (10) selon l'une quelconque des revendications précédentes, comprenant une première ouverture (23) pratiquée dans une paroi (17) du contenant (15), une seconde ouverture (29) pratiquée dans le boîtier (25) et associée d'une manière étanche au fluide à la première ouverture (23), et un corps en forme de bouchon (40) associé au moins à ladite première ouverture (23) et prévu intérieurement avec une ouverture débouchante.

10. Dispositif d'immersion temporaire (10) selon la revendication 9, dans lequel ledit corps en forme de bouchon (40) comprend une partie élargie (42) placée à l'extérieur du contenant (15) et prévue avec un appendice (43) adapté pour être raccordé à une source de gaz sous pression ou une source de vide.

11. Dispositif d'immersion temporaire (10) selon la revendication 9 ou 10, dans lequel le corps en forme de bouchon (40) comprend une partie interne filetée (45) ou tige filetée, insérée dans ladite première ouverture (23), un écrou (46) et une vis interne (33) associée avec ladite seconde ouverture (29), dans lequel l'écrou (46) est intercalé et raccordé entre la vis interne (33) et la partie interne filetée (45) du corps en forme de bouchon (40) et dans lequel une partie (28) du boîtier (25) entourant la vis interne (33) est positionnée entre la vis interne (33) et l'écrou (46).

12. Dispositif d'immersion temporaire (10) selon la revendication 11, comprenant un joint d'étanchéité (32) placé autour de ladite partie interne filetée (45) et dans lequel l'écrou (46) est vissé sur une tige (33b) de la vis interne (33) jusqu'à ce qu'il serre la partie (28) du boîtier (25) contre une tête (33a) de la vis interne (33) et sur la partie interne filetée (45) jusqu'à ce qu'il serre le joint d'étanchéité (32) contre la paroi (17) du contenant (15).

13. Dispositif d'immersion temporaire (10) selon la revendication 12, dans lequel le joint d'étanchéité (32) est poreux au passage de l'air.

14. Procédé pour immerger temporairement des cultures (12) dans un substrat liquide (13), le procédé comprenant les étapes consistant à :
prévoir un contenant fermé (15) définissant une chambre interne (18) appropriée pour loger les cultures (12),
prévoir un outil pneumatique d'actionnement (24) comprenant un boîtier (25) fermé par rapport à ladite chambre interne (18) ;
raccorder l'outil pneumatique d'actionnement (24) à un élément de support (20) des cultures (12),
modifier une pression de fluide dans le boîtier (25) de l'outil pneumatique d'actionnement (24) afin de déplacer l'élément de support (20) dans la chambre interne (18) du contenant (15) entre une première position et une seconde position en fonction de ladite variation de pression.

15. Procédé selon la revendication 14, dans lequel la variation de pression est une réduction de pression et la réduction de pression correspond à un déplacement de levage de l'élément de support (20) entre la première position et la seconde position et une émersion des cultures du substrat liquide (13).
